# EUROPÄISCHE PATENTSCHRIFT

(11) **EP 0 432 349 B1**
(45) Veröffentlichungstag und Bekanntmachung des Hinweises auf die Patenterteilung: **14.12.1994**
(21) Anmeldenummer: 90109526.5
(22) Anmeldetag: 19.05.1990
(51) Int. Cl.: F16H 1/22, B30B 11/24

(54) **Getriebe**
Transmission
Transmission

(30) Priorität: 11.12.1989 DE 3940833
(43) Veröffentlichungstag der Anmeldung: 19.06.1991
(73) Patentinhaber: RHONE-POULENC RHODIA AKTIENGESELLSCHAFT, 79108 Freiburg (DE)
(72) Erfinder: Dollhopf, Rüdiger, Dipl.-Ing., D-7834 Herbolzheim 5 (DE)

(56) Entgegenhaltungen:
- DE-A- 1 729 149
- DE-A- 2 619 019
- DE-A- 3 601 766
- GB-A- 2 012 388
- US-A- 3 359 826

## Beschreibung

Die Erfindung betrifft ein Getriebe mit zwei achsparallel angeordneten, gleichlaufenden Abtriebswellen, insbesondere zum Antrieb eines Doppelschneckenextruders, mit gleich großen An- und Abtriebsritzeln, deren Zähne mit einem größeren als Zentralritzel ausgebildeten Zwischenrad und einem umlaufenden, innenverzahnten Hohlrad in Eingriff stehen, wobei die Ritzel in Umfangsrichtung des Zwischenrades um den Abstand zwischen den beiden Abtriebswellen versetzt angeordnet sind.

Ein derartiges Getriebe als Teil einer Vorrichtung mit einer oder mehreren Schnecken, insbesondere Strangpresse, ist in der DE-B-1 729 149 beschrieben. Bei dem bekannten Extrudergetriebe sind ein koaxial in dem Hohlrad angeordnetes Zwischenrad und insgesamt vier gleich grob Ritzel vorgesehen, die mit der Innenverzahnung des Hohlrades einerseits und der Außenverzahnung des Zwischenrades andererseits kämmen. Zwei der vier Ritzel arbeiten als Abtriebsritzel und zwei als Antriebsritzel. Die beiden Antriebsritzel, die einen etwas größeren Abstand voneinander haben als die beiden Abtriebsritzel, liegen den Abtriebsritzeln in etwa radial gegenüber, die zum Antrieb von gleichlaufenden Doppelschnecken dienen und dementsprechend eng beieinander angeordnet sind

Das bekannte Getriebe mit vier Ritzen benötigt ein Vorgelege zur Leistungsverzweigung oder Drehmomentverzweigung auf die beiden Antriebsritzel.

Aus der DE-C-26 19 019 ist ein dem oben erörterten Getriebe ähnliches Extrudergetriebe bekannt, dessen Zwischenrad nur mit einem als Zentralritzel bezeichneten Antriebsritzel und der Innenverzahnung des Hohlrades kämmt. Das Zentralritzel steht weiterhin mit einem Abtriebsritzel in Eingriff, das ebenfalls mit der Innenverzahnung des Hohlrades kämmt. Die Mittelachsen aller Zahnräder und Ritzel liegen in einer Ebene entlang dem Durchmesser des Hohlrades.

Das Zentralritzel ist auf einer durchgehenden An- und Abtriebswelle angeordnet und hat den gleichen Durchmesser wie das Abtriebsritzel, während der Durchmesser des Zwischenrades doppelt so groß wie die Ritzeldurchmesser und halb so groß wie der Hohlraddurchmesser ist. Da das Zentralritzel und das Abtriebsritzel miteinander kämmen, können nur Extruder mit gegenlaufenden Doppelschnecken durch das bekannte Extrudergetriebe angetrieben werden.

Der Erfindung liegt die Aufgabe zugrunde, ein kostengünstiges Getriebe für Maschinen mit zwei gleichsinnig drehenden Wellen, insbesondere Doppelschneckenextruder mit hohen Leistungen und Austragsdrücken zu schaffen, das bei einem einfachen Aufbau eine hohe Lebensdauer und hohe Standzeiten gewährleistet.

Diese Aufgabe wird bei einem Getriebe der eingangs genannten Art dadurch gelöst, daß eine einzige Antriebswelle vorgesehen ist, die zugleich als erste Abtriebswelle über das nur einfach vorhandene Antriebsritzel hinaus durchgehend und verlängert ausgeführt ist, daß das Abtriebsritzel mit der zweiten Abtriebswelle ebenfalls nur einfach vorhanden ist, und daß
- die Durchmesser der beiden Ritzel größer als der Abstand zwischen den Abtriebswellen und die Ritzel axial gegeneinander versetzt angeordnet sind
oder
- der jeweilige Durchmesser der beiden Ritzel größer als der Achsabstand beider Abtriebswellen ist, wobei das eine Ritzel axial länger und mit einer Aussparung vorgesehen ist, in die das andere axial kürzere Ritzel eintaucht.

Dadurch, daß die Drehmomenteinleitung mit Hilfe einer einzigen Antriebswelle erfolgt und das eine Ritzel drehmomentabgebend während das andere drehmomentempfangend ist, kann auf eine Leistungsvorverzweigung mit einem gesonderten drehmomentverzweigenden Getriebe verzichtet werden, da das erfindungsgemäße Getriebe trotz des einfacheren Gesamtaufbaus zusätzlich die Funktion eines Drehmomentverteilgetriebes und nicht nur lediglich die eines Drehmomentweiterleitgetriebes hat.

Nach der Erfindung haben die An- und Abtriebsritzel einen Durchmesser, der größer als der Abstand zwischen den beiden Abtriebswellen ist. Dabei sind die An- und Abtriebsritzel in axialer Richtung gegeneinander versetzt angeordnet oder ein gegenseitiges Eintauchen der Ritzel wird dadurch ermöglicht, daß ein Ritzel axial länger und mit einer Aussparung ausgebildet wird, in die das andere axial kürzere Ritzel eintaucht. Auf diese Weise wird erreicht, daß die Verwindungen der Schneckenwellen gleich und der Abstandsspalt zwischen den Extruderschnecken klein gehalten werden kann.

Um die Auswirkung von Fertigungstoleranzen auf die Güte der Drehmomentaufteilung und damit auf die Zahnflankenbelastung und deren Verschleiß vollständig auszuschließen, ist gemäß einer Weiterbildung der Erfindung vorgesehen, daß das Hohlrad und das Zwischenrad in einem Käfig gelagert sind, der gegenüber dem die Lager der Antriebs- und Abtriebswellen enthaltenden Gehäuse des Getriebes schwimmend angeordnet ist. Bei einer derartigen Anordnung werden möglicherweise vorhandene Fertigungstoleranzen der vier beteiligten Zahnräder dadurch ausgeglichen, daß der Käfig sich selbstätig in eine Position bringt, bei welcher eine gleichmäßige Drehmomentverzweigung auf je ein Vierteldrehmoment des Gesamtdrehmomentes garantiert ist. Die Belastung und der Verschleiß der Zahnräder sind dann optimal gering.

Da die Reaktionskräfte des Hohlrades und des Zwischenrades gleich groß, aber entgegengesetzt gerichtet sind, neutralisieren sie sich im Käfig. Der an und für sich frei drehbare Käfig wird durch eine Verdrehsicherung in einer bestimmten Position gehalten, damit er nicht gegen eine der beiden Wellen, für die im Käfig Öffnungen vorgesehen sind, anläuft. Die verdrehsicherung muß lediglich die Hälfte der Kraft aufnehmen, die aus den unterschiedlichen Rollwiderständen der Lager des Hohlrades und des Zwischenrades resultiert. Diese Kraft ist jedoch recht klein. Die zweite Hälfte dieser Kraft wird über die An- und Abtriebsritzel an deren Radiallagerung aufgefangen, wodurch diese eine geringe, aber gerichtete Belastung haben, was für deren Lebensdauer von Vorteil ist.

Um eine schneckenseitige Verwindungsgleichheit der beiden Abtriebswellen zu erzielen, kann gemäß einer Ausgestaltung der Erfindung das auf der durchgehenden Antriebs- und Abtriebswelle sitzende Antriebsritzel axial in Richtung auf die Antriebswelle versetzt angeordnet sein, und die Abtriebswelle in der Nähe des Antriebsritzels einen im Durchmesser verstärkten Wellenabschnitt aufweisen. Der Durchmesser und die Länge des verstärkten Wellenabschnittes sind dabei so dimensioniert, daß der axiale Versatz der Drehmomenteinleitung kompensiert wird.

Weitere zweckmäßige Ausgestaltungen der Erfindung ergeben sich aus den Unteransprüchen und der nachfolgenden Beschreibung von Ausführungsbeispielen. Es zeigen:
- Fig. 1: ein Getriebeschema eines Getriebes im Querschnitt,
- Fig. 2: ein Getriebeschema eines Getriebes gemäß der Erfindung mit zur Erzielung geringerer Zahnflankenkräfte vergrößerten Ritzeldurchmessern bei gleichbleibendem Abtriebswellenabstand,
- Fig. 3: ein erfindungsgemäßes Getriebe im Längsschnitt entlang der Linie III-III in Fig. 2 und
- Fig. 4: ein Getriebe gemäß der Erfindung im Längsschnitt, bei dem das Hohlrad und das Zwischenrad des Getriebes in einem gegenüber dem Getriebegehäuse schwimmend angeordneten Käfig gelagert sind.

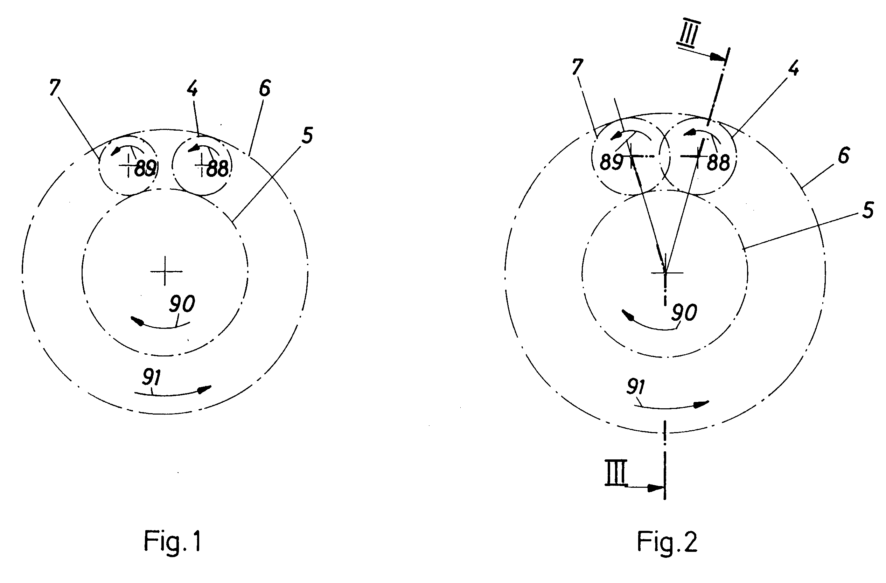

In Fig. 1 erkennt man im Querschnitt ein Getriebeschema für ein Drehmomentverteilgetriebe, das sich als drehmomentverzweigendes Extruder-Getriebe für Extruder mit zwei gleichsinnig drehenden Wellen, wie sie zum Beispiel in Zweischneckenextrudern vorkommen, eingesetzt werden kann. Neben der Anwendung bei Extrudern kann das in Fig. 1 schematisch dargestellte Getriebe auch für andere gleichläufige Zweiwellenmaschinen mit geringem Wellenabstand eingesetzt werden.

Das in Fig. 2 schematisch dargestellte Getriebe gestattet eine Drehmomentverzweigung von einer auf zwei Wellen, wobei insbesondere eine Aufteilung des Antriebsdrehmomentes auf zwei Schneckenwellen eines Extruders möglich ist.

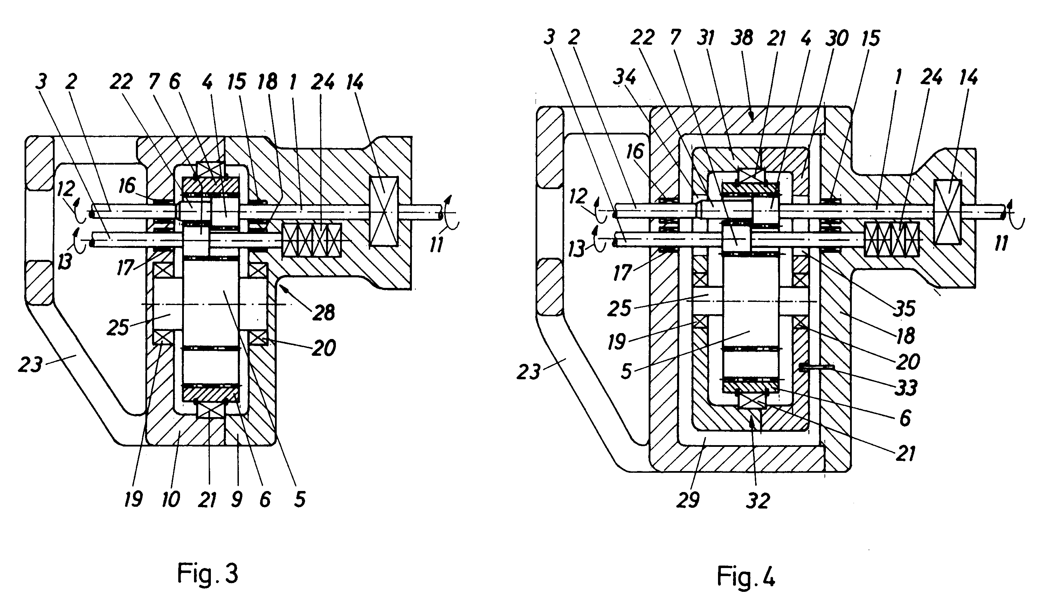

Die Einleitung eines Drehmomentes erfolgt über eine Antriebswelle 1, die in Fig. 3 zu erkennen ist, welche ein Getriebe im Längsschnitt darstellt, dessen Getriebeschema in Fig. 2 im Querschnitt schematisch dargestellt ist. Die in der Zeichnung dargestellten Getriebe gestatten eine Drehmomentaufteilung des an der Antriebswelle 1 eingeleiteten Drehmomentes auf eine erste Abtriebswelle 2 und eine zweite Abtriebswelle 3, die in Fig. 3 zu erkennen sind.

Die Antriebswelle 1 ist bei einem Getriebe mit einem Getriebeschema gemäß Fig. 2 mit einem Antriebsritzel 4 verbunden, über das eine Einleitung des Drehmomentes in das Getriebe erfolgt. Auf der der Antriebswelle 1 gegenüberliegenden Seite des Antriebsritzels 4 befindet sich die erste Abtriebswelle 2, wobei die Antriebswelle 1 und die erste Abtriebswelle 2 als eine durchgehende Welle ausgebildet sein können, auf der das Antriebsritzel 4 drehfest angeordnet ist.

Das Antriebsritzel 4 kämmt mit einem in allen Figuren der Zeichnung dargestellten freilaufenden Zwischenrad 5 mit einer Außenverzahnung und einem konzentrisch zum Zwischenrad 5 angeordneten frei umlaufenden innenverzahnten Hohlrad 6, wie man insbesondere im Querschnitt-Getriebeschema der Fig. 2 erkennt.

In der durch das Antriebsritzel 4 und das Zwischenrad 5 und das Hohlrad 6 festgelegten Ebene befindet sich in einem seitlichen Abstand vom Antriebsritzel 4, der dem Wellenabstand des Extruders entspricht, ein Abtriebsritzel 7, dessen Durchmesser und Zähnezahl dem Durchmesser und der Zähnezahl des Antriebsritzels 4 entspricht. Das Abtriebsritzel 7 ist drehfest auf der bereits erwähnten zweiten Abtriebswelle 3 angeordnet, die bei dem in Fig. 2 dargestellten Schema ebenso wie die erste Abtriebswelle beispielsweise unterhalb der Papierebene liegt, während die Antriebswelle 1 aus der Papierebene herausragt.

Wenn die Abtriebswellen 2 und 3, auf denen die Ritzel 4 und 7 angeordnet sind, durch einen Extruder gebremst werden und über die mit dem Antriebsritzel 4 verbundene Antriebswelle 1 ein Drehmoment eingeleitet wird, erfolgt bei der in Fig. 2 schematisch dargestellten Getriebekonstruktion eine Drehmomentaufteilung in der Weise, daß die Hälfte des eingeleiteten Drehmomentes über die durchgehende Antriebswelle 1 und erste Abtriebswelle 2 direkt abgeleitet wird. Von dem verbleibenden Teildrehmoment wird eine Hälfte vom Antriebsritzel 4 zum Hohlrad 6 und die zweite Hälfte vom Antriebsritzel 4 zum Zwischenrad 5 weitergeleitet. Ein Zahneingriff überträgt somit jeweils ein Viertel des Gesamtdrehmomentes. Pfeile 88, 89, 90, 91 zeigen in Fig. 2 jeweils die Drehrichtung der betroffenen Zahnräder an.

Das Zwischenrad 5 und das Hohlrad 6 leiten jeweils ein Vierteldrehmoment an das Abtriebsritzel 7 weiter, wodurch dieses bei der auf diese Weise mit einem doppelten Zahneingriff erfolgenden doppelten Momenteinleitung insgesamt die Hälfte des über die Antriebswelle 1 in das Getriebe eingeleiteten Drehmomentes erhält.

Bei dem in Fig. 1 dargestellten, nicht einen Teil der Erfindung bildenden Getriebeschema sind die Ritzel 4, 7 abweichend von der Darstellung in Fig. 3 nicht axial versetzt, sondern in der gleichen Ebene angeordnet. Zur Erzielung geringer Zahnflankenkräfte ist es zweckmäßig, die Ritzel 4, 7 bei einem gegebenen Abstand zwischen den Abtriebswellen 2, 3 möglichst groß zu machen. In den Fig. 2 und 3 erkennt man, wie dies erfindungsgemäß durch ein gegenseitiges Eintauchen des Antriebsritzels 4 und des Abtriebsritzels 7 erreicht werden kann. Bei gegebenen Zahnkräften gestattet es diese Anordnung, das übertragbare Moment zu erhöhen.

Das gegenseitige Eintauchen der Ritzel 4, 7 erfolgt am einfachsten durch eine in Fig. 3 erkennbare gegenseitige axiale Verschiebung des Antriebsritzels 4 und des Abtriebsritzels 7. Eine andere in der Zeichnung nicht dargestellte Möglichkeit besteht darin, eines der Ritzel 4, 7 mit einer Ringnut zu versehen, die einen Freiraum für das andere Ritzel 7, 4 zum Eintauchen schafft.

Die Figuren 2 und 3 veranschaulichen eine Anordnung, bei der die beiden Ritzel 4, 7 axial versetzt sind, wobei die axiale Länge der Ritzel 4, 7 etwa halb so groß ist wie die axiale Länge des Zwischenrades 5 und des Hohlrades 6.

Fig. 3 veranschaulicht dieses Merkmal sowie weitere im Querschnitt-Getriebeschema der Fig. 2 nicht erkennbare Einzelheiten des Getriebes.

Durch die versetzte Anordnung verschleißen das Zwischenrad 5 und das Hohlrad 6 nur halb so stark im Vergleich zu einer Anordnung in einer Ebene. Dies hat den Vorteil, daß die beiden Abtriebswellen 2, 3 sich im Laufe der Betriebsdauer weniger stark von ihrer ursprünglichen Stellung zueinander verdrehen. Folge einer solchen Veränderung durch Verschleiß ist eine Reduzierung des Flankenabstandes zwischen den Extruderschnecken mit zunehmender Gefahr eines gegenseitigen Berührens.

Das in Fig. 3 dargestellte Ausführungsbeispiel für ein drehmomentverzweigendes Getriebe verfügt über ein Gehäuse 28 mit einer ersten Gehäusehälfte 9 und einer zweiten Gehäusehälfte 10.

Die bereits erwähnte Antriebswelle 1 ragt in Fig. 3 rechts aus dem Gehäuse 28 heraus und überträgt das durch einen Pfeil 11 veranschaulichte Drehmoment auf die nach links weisenden Abtriebswellen 2, 3 mit einem durch die Pfeile 12, 13 veranschaulichten Drehmoment, das Jeweils halb so groß ist wie das eingeleitete Drehmoment. Die Abtriebswellen 2, 3 sind dabei gleichlaufend und drehen sich in der gleichen Richtung wie die Antriebswelle 1.

Die Antriebswelle 1 ist in einem Axiallager 14 zum Auffangen der Axialkräfte der ersten Schneckenwelle des Extruders gelagert. Bei einem bevorzugten Ausführungsbeispiel hat die Antriebswelle 1 einen Durchmesser, der etwa das 1,26-fache des Durchmessers der Abtriebswelle 2 beträgt. In den Gehäusehälften 9, 10 befinden sich für die durchgehende Antriebswelle 1 mit der Abtriebswelle 2 in der Zeichnung erkennbare Radiallager 15, 16, bei denen es sich, wie bei den Radiallagern 17 und 18 für die zweite Abtriebswelle 3 und den Radiallagern 19 und 20 für das Zwischenrad 5, um übliche, unkorrigierte Radiallager handeln kann. Die Lagerung des Hohlrades 6 mit Hilfe eines Radiallagers 21 ist ebenfalls unproblematisch.

Wegen der um 180 Grad versetzten Momentab- bzw.-aufnahmen an den Ritzeln 4, 7 und der gemeinsamen Drehachse des Zwischenrades 5 und des Hohlrades 6 neutralisieren sich die Reaktionskräfte auf das Antriebsritzel 4 ebenso wie die Reaktionskräfte auf das Abtriebsritzel 7. Dies bedeutet, daß diese beiden Zahnritzel frei von Durchbiegungen sind und ihre Radiallagerungen frei von Kräften. Sie sind daher praktisch unbelastet.

In Fig. 3 erkennt man links neben dem Antriebsritzel 4 einen Wellenabschnitt 22, der infolge seines größeren Durchmessers verstärkt ist. Auf diese Weise läßt sich eine schneckenseitige Verwindungsgleichheit erzielen, wenn der Durchmesser des Wellenabschnittes 22 und seine Länge so dimensioniert werden, daß der axiale Versatz der Drehmomenteinleitung infolge des axialen Versatzes zwischen den Ritzeln 4, 7 kompensiert wird.

Wie man in Fig. 3 weiter erkennt, sind in der linken oder zweiten Gehäusehälfte 10 Öffnungen und insbesondere eine Durchtrittsöffnung 23 vorgesehen, durch die sich die Abtriebswellen 2, 3, die mit den Schneckenwellen des Extruders verbunden sind, erstrecken. Die zweite Abtriebswelle 3 endet auf der vom Extruder wegweisenden Seite in einem Axiallager 24, das als gestaffeltes Axiallager mit einem kleinen Durchmesser ausgebildet ist. Bemerkt werden soll auch noch, daß der Durchmesser der freilaufenden Welle 25 des Zwischenrades 5 groß ist, so daß die Durchbiegung des Zwischenrades 5 vernachlässigbar ist und handelsübliche unkorrigierte Radiallager 19, 20 verwendet werden können. Erst recht kann das Hohlrad 6 groß ausgeführt werden, so daß auch dessen Durchbiegung praktisch vernachlässigbar ist. Die Lagerung durch das Radiallager 21 des Hohlrades 6 ist bereits von seiner Größe her schon unproblematisch.

Fig. 4 veranschaulicht eine besonders vorteilhafte Ausgestaltung des erfindungsgemäßen Getriebes, die es gestattet, den Einfluß von Fertigungstoleranzen auszuschalten.

Das in Fig. 4 erkennbare zweiteilige Getriebegehäuse 38 verfügt über einen Hohlraum 29 zur Aufnahme eines aus einem ersten Teil 30 und einem zweiten Teil 31 bestehenden Käfigs 32. Im Käfig 32 ist das Radiallager 21 für das umlaufende Hohlrad 6 angeordnet, das bei dem in Fig. 3 dargestellten Ausführungsbeispiel am Gehäuse 28 befestigt ist.

Das bei dem Ausführungsbeispiel gemäß Fig. 3 im Gehäuse 28 abgestützte Radiallager 20 für das Zwischenrad 5 ist bei dem in Fig. 4 dargestellten Ausführungsbeispiel des Getriebes ebenfalls im Käfig 32 angeordnet. Aus diesem Grunde bilden das Zwischenrad 5 und das Hohlrad 6 zusammen mit dem Käfig 32 eine bauliche Einheit, die über die Ritzel 4, 7 beweglich im Hohlraum 29 des Getriebegehäuses 38 geführt ist. Der Käfig 32 wird dabei lediglich mit einer Verdrehsicherung 33 gegen Mitdrehen gesichert. Möglicherweise vorhandene Fertigungstoleranzen der vier beteiligten Zahnräder werden dadurch ausgeglichen, daß der Käfig 32 sich selbstätig in eine Position bringt, welche eine gleichmäßige Drehmomentverzweigung auf je ein Vierteldrehmoment an den Zahnflanken garantiert. Auf diese Weise sind der Verschleiß und die Belastung der betroffenen Zahnräder optimal gering. Es läßt sich anhand eines Kräfteschemas zeigen, daß die Reaktionskräfte vom Hohlrad 6 und Zwischenrad 5 in den Käfig 32 abgeleitet werden und sich dort wegen der gleichen Größe aber entgegengesetzten Richtung neutralisieren.

Die Verdrehsicherung 33, zum Beispiel ein Stift, hält den an und für sich frei drehbaren Käfig 32 in einer bestimmten Position, damit der Rand zweier Durchgangsöffnungen 34, 35 nicht gegen eine der Wellen 1, 2, 3 anläuft. Die Verdrehsicherung 33 muß lediglich die Hälfte der Kraft aufnehmen, die aus dem unterschiedlichen Rollwiderstand der Radiallager 19, 20 einerseits und des Radiallagers 21 andererseits resultiert. Diese Kraft ist jedoch recht klein und die zweite Hälfte dieser Kraft wird über die beiden Ritzel 4, 7 an deren Radiallagerung 15, 16, 17, 18 abgefangen, wodurch diese eine geringe aber gerichtete Belastung haben, was jedoch für deren Lebensdauer von Vorteil ist.

Wie sich aus einem Vergleich der Fig. 3 und 4 ergibt, stimmten die beiden Getriebe in den den Käfig 32 nicht betreffenden Merkmalen überein. Das Gehäuse 38 verfügt fluchtend zu den Durchgangsöffnungen 34 und 35 über die bereits im Zusammenhang mit Fig. 3 erwähnte Öffnung 23 sowie über Ausnehmungen für die Axiallager 14 und 24 sowie die Radiallager 15, 16, 17 und 18.

## Patentansprüche

1. Getriebe mit zwei achsparallel angeordneten, gleichlaufenden Abtriebswellen (2, 3), insbesondere zum Antrieb eines Doppelschneckenestruders, mit gleich großen An- und Abtriebsritzeln (4, 7), deren Zähne mit einem größeren als Zentralritzel ausgebildeten Zwischenrad (5) und einem umlaufenden, innenverzahnten Hohlrad (6) in Eingriff stehen, wobei die Ritzel (4, 7) in Umfangsrichtung des Zwischenrades (5) um den Abstand zwischen den beiden Abtriebswellen (2, 3) versetzt angeordnet sind, dadurch gekennzeichnet, daß eine einzige Antriebswelle (1) vorgesehen ist, die zugleich als erste Abtriebswelle (2) über das nur einfach vorhandene Antriebsritzel (4) hinaus durchgehend und verlängert ausgeführt ist, daß das Abtriebsritzel (7) mit der zweiten Abtriebswelle (3) ebenfalls nur einfach vorhanden ist, und daß
- die Durchmesser der beiden Ritzel (4, 7) größer als der Abstand zwischen den Abtriebswellen (2, 3) und die Ritzel (4, 7) axial gegeneinander versetzt angeordnet sind
oder
- der jeweilige Durchmesser der beiden Ritzel (4, 7) größer als der Achsabstand beider Abtriebswellen (2, 3) ist, wobei das eine Ritzel axial länger und mit einer Aussparung vorgesehen ist, in die das andere axial kürzere Ritzel eintaucht.

2. Getriebe nach Anspruch 1, dadurch gekennzeichnet, daß das Hohlrad (6) und das Zwischenrad (5) in einem Käfig (32) gelagert sind, der gegenüber dem die Lager (14, 15, 16, 17, 18, 24) der Antriebs- und Abtriebswellen (1, 2, 3) enthaltenden Gehäuse (38) des Getriebes schwimmend angeordnet ist.

3. Getriebe nach Anspruch 2, dadurch gekennzeichnet, daß der Käfig (32) eine Verdrehsicherung (33) aufweist.

4. Getriebe nach Anspruch 3, dadurch gekennzeichnet, daß die Verdrehsicherung (33) ein radial gegenüber den Ritzeln (4, 7) angeordneter Stift ist, der den Zwischenraum (29) zwischen dem Käfig (32) und der Innenseite des Gehäuses (38) des Getriebes überbrückt und nur innerhalb eines vorgegebenen Bereichs eine Käfigbewegung zuläßt.

5. Getriebe gemäß der Ausführungsart nach Anspruch 1, bei der die Durchmesser der beiden Ritzel (4, 7) größer als der Abstand zwischen den Abtriebswellen (2, 3) und die Ritzel (4, 7) axial gegeneinander versetzt angeordnet sind, dadurch gekennzeichnet, daß das auf der durchgehenden Antriebs- und Abtriebswelle (1, 2) sitzende Antriebsritzel (4) axial in Richtung auf die Antriebswelle (1) versetzt angeordnet ist und daß die Abtriebswelle (2) in der Nähe des Antriebsritzels (4) einen im Durchmesser verstärkten Wellenabschnitt (22) aufweist.

6. Getriebe nach einem der vorstehenden Ansprüche, dadurch gekennzeichnet, daß die Antriebswelle (1) einen größeren Durchmesser als die beiden Abtriebswellen (2, 3) aufweist.

7. Getriebe nach Anspruch 6, dadurch gekennzeichnet, daß der Durchmesser der Antriebswelle (1) etwa das 1,26-fache des Durchmessers der Abtriebswelle (2) beträgt.

8. Getriebe nach einem der Ansprüche 1 bis 7, dadurch gekennzeichnet, daß das Zwischenrad (5) und das Hohlrad (6) koaxial zueinander angeordnet sind.

## Claims

1. A transmission with two output shafts (2, 3) arranged axially parallel and running in the same direction, in particular for driving a twin screw extruder, with driving and driven pinions (4, 7) of equal size, whose teeth engage with a larger intermediate gear wheel (5) designed as a central pinion and a rotating internal gear wheel (6), in which arrangement the pinions (4, 7) are arranged to be offset in the circumferential direction of the intermediate gear wheel (5) by the interspacing of the two output shafts (2, 3), characterized in that provision is made for a single drive shaft (1) which is designed at the same time as the first output shaft (2), being extended and passing through beyond the drive pinion (4) which is provided in only a single version, that the driven pinion (7) is also only provided in a single version together with the second output shaft (3), and that
- the diameters of the two pinions (4, 7) are larger than the distance between the output shafts (2, 3) and that the pinions (4, 7) are arranged with an axial offset with respect to each other
or
that the respective diameter of the two pinions (4, 7) is larger than the axial distance between the two output shafts (2, 3), in which arrangement one pinion is axially longer and is provided with a recess wherein the other axially shorter pinion is inserted.

2. A transmission according to claim 1, characterized in that the internal gear wheel (6) and the intermediate gear wheel (5) are mounted in a cage (32) which is arranged to float relative to the housing (38) of the transmission containing the bearings (14, 15, 16, 17, 18, 24) of the drive and output shafts (1, 2, 3).

3. A transmission according to claim 2, characterized in that the cage (32) has a means (33) for preventing rotation.

4. A transmission according to claim 3, characterized in that the means (33) preventing rotation is a pin arranged radially opposite the pinions (4, 7) which bridges the gap (29) between the cage (32) and the inner side of the housing (38) of the transmission and only allows the cage to move within a preset range.

5. A transmission according to the mode of embodiment in accordance with claim 1, wherein the diameters of the two pinions (4, 7) are larger than the distance between the output shafts (2, 3), and the pinions (4, 7) are arranged axially offset with respect to each other, characterized in that the drive pinion (4) disposed on the through drive and output shaft (1, 2) is axially offset in the direction towards the drive shaft (1), and that the output shaft (2) has in the vicinity of the drive pinion (4) a shaft section (22) that is enlarged in its diameter.

6. A transmission according to one of the preceding claims, characterized in that the drive shaft (1) has a larger diameter than the two output shafts (2, 3).

7. A transmission according to claim 6, characterized in that the diameter of the drive shaft (1) corresponds approximately to 1.26 times the diameter of the output shaft (2).

8. A transmission according to one of claims 1 to 7, characterized in that the intermediate gear wheel (5) and the internal gear wheel (6) are arranged coaxially with respect to each other.

## Revendications

1. Transmission à deux arbres de sortie (2, 3) tournant dans le même sens, parallèles, en particulier pour l'entraînement d'une boudineuse à double vis, comportant des pignons d'attaque et de sortie (4, 7) de mêmes dimensions dont les dents sont en prise avec une roue intermédiaire (5) plus grande, réalisée sous forme de pignon central, et avec une roue à denture intérieure (6), les pignons (4, 7) étant décalés, suivant le périmètre de la roue intermédiaire (5), de la distance entre les deux arbres de sortie (2, 3), caractérisée en ce qu'elle comprend un seul arbre d'entraînement (1), qui est réalisé en même temps comme premier arbre de sortie (2), du fait qu'il est continu et prolongé au-delà du pignon d'attaque (4) qui n'existe qu'à un seul exemplaire, que le pignon de sortie (7), avec le deuxième arbre de sortie (3), n'existe lui aussi qu'à un seul exemplaire, et que :
- les diamètres des deux pignons (4, 7) sont plus grands que la distance entre les arbres de sortie (2, 3) et que les pignons (4, 7) sont décalés axialement l'un par rapport à l'autre,
ou que :
- le diamètre de chacun des deux pignons (4, 7) est plus grand que l'entraxe des deux arbres de sortie (2, 3), l'un des pignons étant plus long axialement et présentant une échancrure dans laquelle pénètre l'autre pignon, qui est plus court axialement.

2. Transmission suivant la revendication 1, caractérisée en ce que la roue à denture intérieure (6) et la roue intermédiaire (5) sont logées dans une cage (32) qui est montée de manière flottante par rapport au carter (38) de la transmission qui contient les paliers (14, 15, 16, 17, 18, 24) des arbres d'entraînement et de sortie (1, 2, 3).

3. Transmission suivant la revendication 2, caractérisée en ce que la cage (32) est pourvue d'un élément (33) de blocage contre une rotation intempestive.

4. Transmission suivant la revendication 3, caractérisée en ce que l'élément (33) de blocage contre une rotation intempestive est une goupille placée radialement par rapport aux pignons (4, 7), qui traverse l'espace intermédiaire (29) compris entre la cage (32) et la face intérieure du carter (38) de la transmission et qui ne permet de mouvements de la cage qu'à l'intérieur d'un domaine prescrit.

5. Transmission suivant le mode de réalisation de la revendication 1, dans laquelle les diamètres des deux pignons (4, 7) sont plus grands que la distance entre les arbres de sortie (2, 3) et les pignons (4, 7) sont montés décalés axialement l'un par rapport à l'autre, caractérisée en ce que le pignon d'attaque (4) monté sur l'arbre continu d'entraînement et de sortie (1, 2) est décalé axialement en direction de l'arbre d'entraînement (1) et que l'arbre de sortie (2) présente, au voisinage du pignon d'attaque (4), une section d'arbre (22) dont le diamètre est augmenté.

6. Transmission suivant l'une quelconque des revendications précédentes, caractérisée en ce que l'arbre d'entraînement (1) a un plus grand diamètre que les deux arbres de sortie (2, 3).

7. Transmission suivant la revendication 6, caractérisée en ce que le diamètre de l'arbre d'entraînement (1) est égal à environ 1,26 fois le diamètre de l'arbre de sortie (2).

8. Transmission suivant l'une quelconque des revendications 1 à 7, caractérisée en ce que la roue intermédiaire (5) et la roue à denture intérieure (6) sont coaxiales.
